# EUROPÄISCHE PATENTSCHRIFT

(11) **EP 4 331 095 B1**
(45) Veröffentlichungstag und Bekanntmachung des Hinweises auf die Patenterteilung: **29.01.2025**
(21) Anmeldenummer: 22708275.7
(22) Anmeldetag: 08.02.2022
(51) Int. Cl.: H02K 9/10

(54) **ELEKTRISCHE MASCHINE**
ELEKTRISCHE MASCHINE
MACHINE ÉLECTRIQUE

(30) Priorität: 27.04.2021 AT 503142021
(43) Veröffentlichungstag der Anmeldung: 06.03.2024
(73) Patentinhaber: Andritz Hydro GmbH, 1120 Wien (AT)
(72) Erfinder: KASTNER, Gebhard, 8700 Leoben (AT); LANGMAYR, Daniel, 8062 Kumberg (AT); BLAZEVIC, Enes, 8211 Prebensdorf (AT)
(74) Vertreter: Wirnsberger & Lerchbaum Patentanwälte OG
(86) Internationale Anmeldenummer: PCT/AT2022/060038
(87) Internationale Veröffentlichungsnummer: WO 2022/226555

(56) Entgegenhaltungen:
- EP-A2- 1 653 592
- DE-A1- 102013 200 105
- DE-A1- 102018 129 897
- DE-A1- 3 007 917
- US-A1- 2004 007 878
- US-A1- 2017 149 307
- US-A1- 2018 309 348

## Beschreibung

Die Erfindung betrifft eine elektrische Maschine, insbesondere einen Generator, mit einem einen Wickelkopf aufweisenden Stator, einem um eine Rotorachse drehbar im Stator angeordneten Rotor und einem Wärmetauscher, wobei der Wärmetauscher fluidisch über einen radial außerhalb des Wickelkopfes angeordneten, zumindest teilweise etwa entlang einer Umfangsrichtung verlaufenden und in einer Radialrichtung durch eine Außenfläche begrenzten Kühlmittelschacht mit dem Wickelkopf verbunden ist, sodass der Wickelkopf mittels einer kontinuierlichen Strömung eines Fluides über den Wärmetauscher und den Wickelkopf kühlbar ist.

Aus dem Stand der Technik sind elektrische Maschinen der eingangs genannten Art hinlänglich bekannt. Eine Schwierigkeit bei einer Auslegung einer derartigen Maschine stellt nach wie vor eine Temperatur des Wickelkopfes dar. So erwärmt sich der Wickelkopf während eines Betriebes aufgrund von in diesem Bereich auftretenden Verlusten üblicherweise stark, weswegen derartige Maschinen häufig als fremdbelüftete Maschinen ausgebildet sind, wobei ein oder mehrere Ventilatoren in einem Strömungspfad eines Kühlfluides angeordnet sind, welcher Strömungspfad vom Wärmetauscher zum Wickelkopf und über einen anderen Rückströmungspfad, beispielsweise durch ein Statorblechpaket, zurück zum Wärmetauscher führt, sodass eine zirkulierende Strömung in der Maschine erreichbar ist, wobei das Kühlfluid, üblicherweise Luft, am Wickelkopf Wärme aufnimmt und diese am Wärmetauscher abgibt. US 2006/043801 A1 offenbart eine elektrische Maschine mit einem einen Wickelkopf aufweisenden Stator, einem um eine Rotorachse drehbar im Stator angeordneten Rotor und einem Wärmetauscher.

Der Wärmetauscher ist bei derartigen Maschinen in aller Regel in einem oberen, unteren oder seitlichen Bereich des Stators, in aller Regel außerhalb der Rotationsachse, angeordnet, sodass einzelne Wickelkopfbereiche entlang eines Strömungspfades des Kühlfluides weiter als andere vom Wärmetauscher und dem bzw. den Ventilatoren beabstandet sind, wodurch eine gleichmäßige Kühlung des Wickelkopfes über einen gesamten Umfang schwierig ist und häufig Heißstellen auftreten, die insbesondere Beschädigungen einer Isolation zur Folge haben können.

Hier setzt die Erfindung an. Aufgabe der Erfindung ist es, eine Maschine der eingangs genannten Art anzugeben, bei welcher eine besonders gleichmäßige Kühlung des Wickelkopfes ermöglicht ist.

Diese Aufgabe wird erfindungsgemäß durch eine elektrische Maschine der eingangs genannten Art gelöst, bei welcher im Kühlmittelschacht mehrere, entlang einer Umfangsrichtung verteilt angeordnete Leitelemente vorgesehen sind, um eine in Umfangsrichtung orientierte Strömung eines Fluides im Kühlmittelschacht zumindest teilweise in eine Radialströmung zum Wickelkopf hin umzulenken und die Strömung auf mehrere Bereiche des Wickelkopfes zu verteilen.

Im Rahmen der Erfindung wurde erkannt, dass durch entsprechend angeordnete Leitelemente, welche eine zunächst in Umfangsrichtung orientierte Strömung im Kühlmittelschacht jeweils teilweise in eine Radialströmung zum Wickelkopf hin umlenken, eine gleichmäßige Verteilung von Luft auf einzelne Bereiche des Wickelkopfes ermöglicht ist, obwohl eine Zuführung in den Kühlmittelschacht in aller Regel asymmetrisch und nur von einer Seite erfolgt, zumal der in der Regel als Luft-Wasser-Wärmetauscher ausgebildete Wärmetauscher üblicherweise unterhalb eines Statorblechpaketes angeordnet ist. Dadurch wird erreicht, dass ein Kühlfluid auch eine von einer Zuströmseite, von welcher aus das Kühlfluid in den Kühlmittelschacht eintritt, abgewandte Seite des Wickelkopfes erreicht und auch diese Seite gekühlt wird, um insbesondere ein Entstehen von Heißstellen in diesem Bereich zu vermeiden.

Üblicherweise ist bei derartigen Maschinen die Rotorachse etwa horizontal ausgerichtet, bzw. die Maschine als Horizontalmaschine ausgebildet, wenngleich die Rotorachse natürlich auch unter einem Winkel zu einer Horizontalen, insbesondere vertikal, angeordnet sein kann.

Ein Rückströmungspfad, über welchen das Kühlfluid nach Aufnahme von Wärme im Wickelkopf zum Wärmetauscher zurückströmen kann, kann beispielsweise durch den Stator, insbesondere durch das Statorblechpaket, verlaufen.

Das Kühlfluid bildet somit in der Regel eine kontinuierlich in der Maschine zwischen Wickelkopf und Wärmetauscher zirkulierende Strömung, um Verlustwärme des Wickelkopfbereiches und gegebenenfalls eines Blechpaketbereiches mittels des Kühlfluides vom Wickelkopf zum Wärmetauscher und über den Wärmetauscher aus der Maschine zu transportieren.

Bevorzugt ist vorgesehen, dass die Leitelemente etwa radial ausgerichtet sind. Durch eine Ausrichtung der Leitelemente, welche bevorzugt plattenförmig ausgebildet sind, entlang der Radialrichtung kann eine besonders gute Umleitung einer tangentialen Zuströmung in den Kühlmittelschacht in eine radiale Strömung in Richtung des Wickelkopfes erreicht werden.

Die Begriffe Radialrichtung und Umfangsrichtung sind hier im Sinne eines zylindrischen Koordinatensystems des Rotors der Maschine zu verstehen, wobei die Umfangsrichtung einer möglichen Drehrichtung des Rotors um die Rotorachse entspricht.

Ein Teil einer Strömung, welche durch ein Leitelement in eine Radialströmung zum Wickelkopf hin umgelenkt wird, weist somit nach der Umlenkung einen Geschwindigkeitsvektor mit einer größeren Geschwindigkeitskomponente zur Rotorachse hin auf als vor der Umlenkung. Im Sinne des zylindrischen Koordinatensystems weist dieser Teil der Strömung bzw. ein entsprechendes Strömungsvolumen somit nach der Umlenkung eine größere Geschwindigkeitskomponente in negativer Radialrichtung und einen geringeren Betrag einer Geschwindigkeitskomponente in Umfangsrichtung bzw. entgegen der Umfangsrichtung als vor der Umlenkung auf.

Bevorzugt ist vorgesehen, dass die Außenfläche zumindest teilweise etwa als Rotationsfläche zur Rotorachse, insbesondere als Zylindermantelfläche oder Kegelmantelfläche, ausgebildet ist. Dadurch kann auf besonders effiziente Weise eine etwa radiale Zuströmung in den Kühlmittelschacht, üblicherweise von einem an einer Seite des Wickelkopfes, welche auch als Zuströmseite bezeichnet werden kann, angeordneten Ventilator ausgehend, in eine teilweise in Umfangsrichtung verlaufende Strömung umgelenkt werden, mit welcher auch eine der Zuströmseite gegenüberliegende Seite des Wickelkopfes erreicht wird, um auch diesen Teil des Wickelkopfes zu kühlen.

Somit wird eine Strömung des Kühlfluides über die zur Rotorachse rotationssymmetrische Außenfläche des Kühlmittelschachtes in eine etwa tangential verlaufende bzw. entlang einer Umfangsrichtung verlaufende Strömung umgelenkt, wonach diese in Umfangsrichtung verlaufende Strömung mittels der Leitelemente in einzelnen Bereichen des Wickelkopfes in eine Radialströmung umgelenkt werden kann, um den Wickelkopf möglichst gleichmäßig zu kühlen. Besonders günstig ist es in dem Zusammenhang, wenn die einzelnen Leitelemente in einem der Zuströmseite gegenüberliegenden Bereich des Wickelkopfes jeweils einen etwa gleich großen Anteil der in Umfangsrichtung verlaufenden Strömung in Radialrichtung umlenken, sodass die einzelnen Leitelemente in diesem Bereich etwa gleich große Teile der in Umfangsrichtung orientierten Strömung umlenken bzw. jeweils von einer in Umfangsrichtung orientierten Strömung etwa gleich große Teile nach innen hin abschaben.

Bevorzugt ist vorgesehen, dass die Leitelemente mit etwa gleichem Abstand zur Rotorachse angeordnet sind. Die Leitelemente können beispielsweise als Leitbleche ausgebildet sein, welche im Luftschacht, welcher Teil eines Gehäuses des Generators sein kann, angeordnet sind. Die Leitelemente können jedoch auch mit dem Wickelkopf verbundene Elemente sein, welche dazu geeignet sind, eine Strömung zumindest teilweise in eine Radialströmung zum Wickelkopf hin umzulenken, insbesondere Schalttürme.

Es hat sich bewährt, dass über einen Umfang verteilt 10 bis 100, insbesondere 30 bis 60, Leitelemente angeordnet sind. Dadurch kann eine besonders gleichmäßige Verteilung des Fluidstroms, welcher in der Maschine üblicherweise zwischen dem bzw. den Wärmetauschern und dem bzw. den Wickelköpfen zirkuliert auf einzelne Teile des bzw. der Wickelköpfe erreicht werden.

Die Maschine weist in aller Regel zwei Wickelköpfe auf, welche jeweils mit einem Kühlfluid gekühlt werden. Bevorzugt ist vorgesehen, dass das Kühlfluid nach einem Passieren des Wickelkopfes durch einen Luftspalt in ein Inneres des Stators bewegt wird, wonach es durch Ventilationsschlitze im Statorblechpaket radial nach außen bewegt wird und dabei Wärme vom Statorblechpaket aufnimmt, wonach das Kühlfluid zurück zum Wärmetauscher und dem Ventilator bewegt wird, welcher eine oder mehrere Ventilatoreinrichtungen, insbesondere einen oder mehrere Axialventilatoren oder Radialventilatoren, aufweisen kann. Das Kühlfluid zirkuliert somit in der Regel entlang eines umlaufenden Strömungspfades vom Wärmetauscher über den Ventilator zum Wickelkopf, dem Stator und wieder zurück zum Wärmetauscher.

Besonders bevorzugt ist vorgesehen, dass jegliches in der Maschine zirkulierende Kühlfluid über einen der Wickelköpfe bewegt wird, um diese besonders gut zu kühlen. Eine derartige Maschine wird auch als serienbelüftete Maschine bezeichnet.

Üblicherweise ist vorgesehen, dass die Leitelemente mit einem Abstand zur Außenfläche angeordnet sind. Es wird somit durch einen freien Strömungsquerschnitt zwischen der Außenfläche und den Leitelementen ein Strömungsfluid zu Bereichen des Wickelkopfes transportiert, welche entlang eines Strömungspfades noch weiter von einer Zuströmseite entfernt sind, während gleichzeitig über die einzelnen Leitelemente ein Teil der Strömung in Radialrichtung zum Wickelkopfbereich hin umgelenkt wird. Dies ermöglicht somit eine gleichmäßige Belüftung einzelner Teile des Wickelkopfes bei gleichzeitig konstruktiv einfachem Aufbau, zumal ein radial außerhalb der Leitelemente strömender Volumenstrom durch die Leitelemente nahezu nicht beeinflusst wird und sich damit die Wirkung der Leitelemente genau begrenzen lässt. Mit den Leitelementen kann somit gezielt ein definierter Teil des im Kühlmittelschacht entlang einer Umfangsrichtung bewegten Volumenstromes abgeschabt und radial nach innen umgelenkt werden.

Günstig ist es, wenn die Leitelemente unterschiedliche, insbesondere stetig abnehmende, Abstände zur Außenfläche aufweisen, wobei die Leitelemente mit zunehmender Entfernung vom Wärmetauscher in Strömungsrichtung einen geringeren Abstand von der Außenfläche aufweisen. Ein freier Strömungsquerschnitt zwischen der Außenfläche und den im Kühlmittelschacht angeordneten Leitelementen nimmt somit mit zunehmendem Abstand vom Wärmetauscher in Strömungsrichtung ab, und zwar bevorzugt von einem Leitelement zum nächsten Leitelement um einen etwa gleich großen Betrag, beispielsweise von einem Leitelement zum nächsten Leitelement entlang der Strömungsrichtung im Kühlmittelschacht um 1 mm bis 20 mm in Radialrichtung. Konstruktiv kann dies beispielsweise durch sich mit zunehmendem Abstand vom Wärmetauscher in Strömungsrichtung weiter in Radialrichtung erstreckende Leitelemente erreicht werden, welche beispielsweise mit einem in einer Axialrichtung etwa konstanten Querschnitt ausgebildet sein können.

Bevorzugt erstrecken sich die Leitelemente in axialer Richtung etwa über eine Länge, welche einer Länge des Wickelkopfes und/oder einer axialen Länge des Kühlmittelschachtes entspricht.

Beispielsweise können die Leitelemente plattenförmig, insbesondere etwa quaderförmig, ausgebildet sein und sich Schmalseiten etwa entlang der Radialrichtung und parallel zur Rotorachse erstrecken, sodass eine Oberfläche der Leitelemente, welche eine größte Oberfläche aufweist, etwa normal zur Umfangsrichtung orientiert ist, um eine besonders effektive Strömungsumlenkung zu bewirken.

Durch in Radialrichtung unterschiedlich lang ausgebildete Leitelemente wird auf konstruktiv einfache Weise eine besonders gleichmäßige Kühlung des Wickelkopfes über einen Umfang desselben erreicht, zumal an jedem Leitelement ein etwa gleich großer Volumenstrom abgeschabt bzw. radial zum Wickelkopf nach innen hin umgelenkt wird. Insbesondere wird dadurch verhindert, dass ein hinter einem vorgelagerten Leitelement angeordnetes nachgelagertes Leitelement aufgrund eines Abschattungseffektes durch das vorgelagerte Leitelement keine oder nur eine ungenügende Umlenkung eines Volumenstromes in Radialrichtung bewirkt.

Besonders bevorzugt ist vorgesehen, dass ein freier Strömungsquerschnitt zwischen der Außenfläche und einem Leitelement zumindest bereichsweise stetig mit zunehmendem Abstand vom Wärmetauscher in Strömungsrichtung von einem Leitelement zum nächsten Leitelement abnimmt. Wenn der Kühlmittelschacht, was bevorzugt sein kann, in einem Schnitt normal zur Rotorachse zumindest bereichsweise etwa kreisringförmig, also mit einem im Wesentlichen konstanten Abstand der Außenfläche zur Rotorachse, ausgebildet ist, kann ein entsprechend geringer werdender Abstand zwischen der Außenfläche und den Leitelementen entlang der Strömungsrichtung durch Leitelemente erreicht werden, welche mit zunehmendem Abstand vom Wärmetauscher in Strömungsrichtung eine größere Erstreckung in Radialrichtung aufweisen, sodass diese bei etwa gleichem Abstand zur Rotorachse mit zunehmendem Abstand vom Wärmetauscher in Strömungsrichtung radial weiter nach außen in den Kühlmittelschacht ragen. Bevorzugt erstrecken sich somit Leitelemente mit zunehmendem Abstand vom Wärmetauscher weiter radial nach außen bzw. in den Kühlmittelschacht hinein, sodass ein freier Strömungsquerschnitt entlang der Strömungsrichtung geringer wird.

Alternativ oder ergänzend zu unterschiedlich langen Leitelementen kann ein mit einem Abstand vom Wärmetauscher in Strömungsrichtung abnehmender freier Strömungsquerschnitt natürlich auch durch einen entlang der Strömungsrichtung abnehmenden Querschnitt des Kühlmittelschachtes erreicht werden, insbesondere mit einem zumindest bereichsweise etwa spiralförmig ausgebildeten Kühlmittelschacht.

Über eine Größe des freien Querschnittes bzw. den Abstand zwischen den Leitelementen und der Außenfläche kann somit auf einfache Weise eine Aufteilung der einlangenden, im Wesentlichen in Umfangsrichtung orientierten Strömung in einen ersten Teil und einen zweiten Teil erreicht werden, wobei der erste Teil in Radialrichtung nach Innen umgelenkt wird, um einen dem jeweiligen Leitelement zugeordneten Bereich des Wickelkopfes zu kühlen, und wobei der zweite Teil der Strömung in Umfangsrichtung orientiert ist, um in Strömungsrichtung nachgelagerte Bereiche des Wickelkopfes zu kühlen.

Es versteht sich, dass für eine konkrete konstruktive Auslegung des Kühlmittelschachtes und der Leitelemente auch numerische Berechnungsmethoden zur Strömungssimulation eingesetzt werden können.

Die Leitelemente können grundsätzlich beliebig ausgebildet sein. Zur Erreichung eines konstruktiv einfachen und gleichzeitig mechanisch stabilen Aufbaues hat es sich bewährt, wenn die Leitelemente plattenförmig ausgebildet sind. Die Leitelemente können durch starr mit dem Kühlmittelschacht und/oder starr mit dem Wickelkopf verbundene Elemente gebildet sein, insbesondere durch modifizierte Schalttürme, welche mit dem Wickelkopf verbunden sind, oder durch Leitbleche, welche im Kühlmittelschacht angeordnet sind, beispielsweise mit einem den Kühlmittelschacht bildenden Teil des Gehäuses verschweißt oder verschraubt.

Es kann auch vorgesehen sein, dass die Leitelemente im Kühlmittelschacht lösbar befestigbar und in unterschiedlichen Positionen fixierbar, insbesondere dreh- oder schwenkbar, sind, um eine Feinjustierung leicht vor Ort durchführen zu können.

Es hat sich gezeigt, dass eine besonders gleichmäßige und effektive Kühlung des Wickelkopfes erreicht werden kann, wenn zumindest einige Leitelemente an einem Ende, welches einen freien Strömungsquerschnitt zwischen der Außenfläche und den Leitelementen begrenzt, eine verrundete Kante aufweisen, vorzugsweise an einer Abströmseite. Auf diese Weise werden an der Abströmseite Verwirbelungen reduziert bzw. vermieden, welche eine Umlenkung negativ beeinflussen würden. Beispielsweise können die Leitelemente als Bleche ausgebildet sein und an der radial außen liegenden Kante der Abströmseite, also einer strömungsabwärts gelegenen Seite, eine Verrundung mit einem Radius von 0,5 mm bis 10 mm aufweisen.

Insbesondere an einer Schaltseite des Generators kann vorgesehen sein, dass die Leitelemente durch starr mit dem Wickelkopf verbundene Elemente, insbesondere Schalttürme, gebildet sind. In den Schalttürmen, welche aus Isolationsmaterial bestehen, wird eine elektrische Verbindung zwischen einzelnen elektrischen Leitern des Stators im Wickelkopf hergestellt, insbesondere an einer Seite des Generators, welche als Schaltseite bezeichnet wird, sodass diese Schalttürme regelmäßig über einen Umfang des Wickelkopfes positioniert sind und sich somit dazu eignen, zugleich als Leitelemente eingesetzt zu werden.

Die Schalttürme können hierzu etwa in Radialrichtung ausgerichtete plattenförmige Elemente aufweisen oder durch entsprechend ausgerichtete Elemente gebildet sein, welche sich somit in den Kühlmittelschacht erstrecken.

Die erfindungsgemäße Maschine kann grundsätzlich auch ohne Fremdbelüftung ausgebildet sein, indem eine Strömung allein durch eine Rotation des Rotors bewirkt ist. Bevorzugt ist jedoch vorgesehen, dass ein Ventilator, insbesondere ein Axialventilator oder ein Radialventilator, vorgesehen ist, mit welchem eine Strömung eines Fluides, insbesondere von Luft, in der Maschine vom Wärmetauscher durch den Kühlmittelschacht zum Wickelkopf und zurück zum Wärmetauscher bewirkt werden kann. Beispielsweise kann der Ventilator dazu ausgebildet sein, einen Volumenstrom von 6 m³ pro Sekunde bei einer Druckdifferenz von 2000 Pa und einer Luftdichte von 1,2 kg/m³ zu erreichen, wenngleich natürlich eine konkrete Ausbildung abhängig von einer konstruktiven Auslegung der Maschine ist.

In der Regel sind bei einer rotierenden elektrischen Maschine, welche beispielsweise als Motor oder als Generator ausgebildet sein kann, zwei Wickelköpfe am Stator vorgesehen, wobei grundsätzlich natürlich auch für jeden Wickelkopf separate Ventilatoren bzw. andere Einrichtungen zur Druckerhöhung und gegebenenfalls auch separate Wärmetauscher vorgesehen sein können. Bevorzugt ist jedoch vorgesehen, dass der Stator zwei Wickelköpfe aufweist und jeder Wickelkopf über einen gesonderten Strömungspfad mit dem Ventilator und dem Wärmetauscher verbunden ist. Dadurch sind ein einfacher Aufbau und eine Redundanz auf einfache Weise erreichbar, zumal der Ventilator und der Wärmetauscher beispielsweise zwei oder drei separate Ventilatoren bzw. Wärmetauscher aufweisen können, wobei eine ausreichende Kühlung auch bei Ausfall eines Ventilators oder Wärmetauschers gewährleistet werden kann.

Um eine besonders gleichmäßige Aufteilung eines Strömungsvolumens auf einzelne Bereiche des Wickelkopfes zu erreichen, ist bevorzugt vorgesehen, dass gesonderte Strömungspfade für einen oberen Bereich des Wickelkopfes und einen unteren Bereich des Wickelkopfes vorgesehen sind. Üblicherweise ist der obere Bereich des Wickelkopfes weiter vom Wärmetauscher entfernt bzw. ist ein Strömungspfad vom Wärmetauscher zum oberen Bereich des Wickelkopfes länger als ein Strömungspfad vom Wärmetauscher zum unteren Bereich des Wickelkopfes, sodass über entsprechend gesonderte Strömungspfade eine gleichmäßige Verteilung erreicht werden kann, beispielsweise indem ein Querschnitt des Strömungspfades, welcher den Wärmetauscher mit dem unteren Bereich des Wickelkopfes verbindet, kleiner, und somit ein entsprechender Druckverlust größer, ist als ein Querschnitt des Strömungspfades, welcher den Wärmetauscher mit dem oberen Bereich des Wickelkopfes verbindet. Eine Auftrennung eines Volumenstromes von einem Ventilator, welcher eine oder mehrere Ventilatoreinrichtungen wie Axialventilatoren aufweisen kann, kann beispielsweise mittels eines Trennelementes in einem dem Ventilator nachgelagerten Bereich erfolgen.

Darüber hinaus kann beispielsweise auch noch eine Aufteilung in einen linken und einen rechten Teilvolumenstrom zweckmäßig sein, insbesondere für einen oberen bzw. weiter von der Zuströmseite entfernten Bereich des Wickelkopfes.

Weiters erfolgt bevorzugt eine Aufteilung des Volumenstromes in gesonderte Teile für die einzelnen Wickelköpfe, also in einen Teil für einen Wickelkopf an einer Schaltseite der Maschine und einen Teil für einen Wickelkopf an einer Nicht-Schaltseite der Maschine, sodass der durch den Ventilator bzw. in der Maschine bewegte Volumenstrom eines Kühlfluides üblicherweise in vier Teilvolumenströme aufgeteilt wird, mit welchem die beiden Wickelköpfe gesondert jeweils oben und unten belüftet werden, wobei die vier Teilvolumenströme anschließend durch einen Luftspalt über Ventilationsschlitze im Stator zurück zum Wärmetauscher und dem Ventilator bewegt werden können. Insbesondere bei Aufteilung auch auf Teilvolumenströme für einen linken Bereich des Wickelkopfes und einen rechten Bereich des Wickelkopfes kann natürlich auch eine Aufteilung auf mehr als vier Teilvolumenströme zweckmäßig sein, beispielsweise auf sechs oder acht Teilvolumenströme.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 eine erfindungsgemäße Maschine in Schnittdarstellung;
Fig. 2 ein Detail einer erfindungsgemäßen Maschine;
Fig. 3 ein weiteres Detail einer erfindungsgemäßen Maschine.

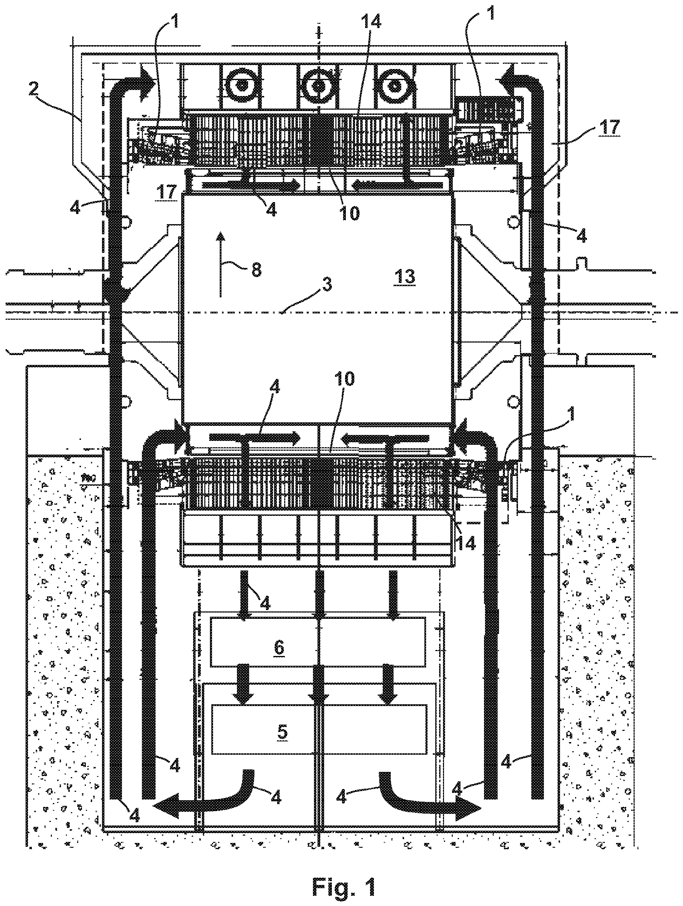

Fig. 1 zeigt eine erfindungsgemäße elektrische Maschine in Schnittstellung. Wie ersichtlich ist die als Motorgenerator ausgebildete rotierende elektrische Maschine hier als Horizontalmaschine ausgebildet, welche beispielsweise in einem Wasserkraftwerk eingesetzt werden kann, und weist somit eine horizontale Rotorachse 3 auf. Eine erfindungsgemäße Maschine kann jedoch auch als Vertikalmaschine ausgebildet sein.

Die dargestellte Maschine ist als fremdbelüftete Maschine ausgebildet, wobei ein Ventilator 5 unter einem Stator angeordnet ist. Durch den Ventilator 5 ist eine in der Maschine kontinuierliche Fluidströmung erreichbar, durch welche Luft oder ein anderes Kühlfluid aufgeteilt auf mehrere Teilvolumenströme entlang der schematisch dargestellten vier Strömungspfade 4 vom Ventilator 5 durch Luftschächte zu Wickelköpfen des Stators, und hier gesondert zu oberen und unteren Bereichen der Wickelköpfe, transportiert wird, an welchen Wärme vom Wickelkopf 1 an das Kühlfluid abgegeben wird.

In weiterer Folge gelangt das Kühlfluid über einen Luftspalt 10 zwischen Rotor 13 und Stator zu im Stator angeordneten Ventilationsschlitzen, über welche das Kühlfluid radial nach außen durch ein Statorblechpaket 14 strömt und dabei Wärme vom Stator aufnimmt, wonach das Kühlfluid über den hier als Luft-Wasser-Wärmetauscher 6 ausgebildeten Wärmetauscher 6, an welchem das Kühlfluid Wärme abgibt, zurück zum Ventilator 5 strömt. Ein Rückströmungspfad aller vier Teilvolumenströme führt somit hier durch den Luftspalt 10 und das Statorblechpaket 14.

Wie in Fig. 1 ersichtlich wird hier die gesamte Maschine von einem unter dem Stator angeordneten Ventilator 5 fremdbelüftet, wobei der Ventilator 5 natürlich auch durch mehrere Ventilatoreinrichtungen gebildet sein kann, beispielsweise durch acht Axial- oder Radialventilatoren.

Bevorzugt wird wie dargestellt eine gesamte Luftmenge, auf welche der Ventilator 5 wirkt, über die Wickelköpfe geführt, sodass eine serielle Kühlung erreicht wird, wodurch eine seriell gekühlte Horizontalmaschine erreicht wird.

In einem Ventilatorauslassbereich wird der Volumenstrom für einen Wickelkopf 1 auf einer Schaltseite der Maschine ebenso wie ein Volumenstrom für einen Wickelkopf 1 auf einer Nicht-Schaltseite der Maschine jeweils auf zwei parallele Zweige aufgeteilt, wobei ein Zweig einen oberen Bereich der Wickelköpfe mit Kühlfluid versorgt und ein Zweig einen unteren Bereich der Wickelköpfe. Dies ist hier zweckmäßig, zumal eine Zuströmseite, von welcher das Kühlfluid zum Wickelkopf 1 transportiert wird, hier unterhalb des Stators angeordnet ist, sodass Strömungspfade 4 zum unteren Bereich des Wickelkopfes 1 entsprechend kürzer sind als Strömungspfade 4 des Kühlfluides zum oberen Bereich des Wickelkopfes 1. Über Wahl entsprechender Querschnitte der Strömungspfade 4 zum oberen Bereich und zum unteren Bereich kann somit dennoch eine sehr gleichmäßige Anströmung und damit Kühlung dieser unterschiedlich weit vom Ventilator 5 beabstandeten Bereiche gewährleistet werden. Es versteht sich, dass insbesondere dann, wenn der Ventilator 5 nicht unterhalb, sondern beispielsweise seitlich des Stators positioniert wäre, auch eine Aufteilung auf einen linken Bereich und einen rechten Bereich des Wickelkopfes 1 günstig sein könnte.

Weiter erfolgt eine Aufteilung auf die zwei Wickelköpfe des Stators, also einen Wickelkopf 1 auf einer Schaltseite des Stators und einen Wickelkopf 1 auf einer Nicht-Schaltseite des Stators. Der in der Maschine zirkulierende Volumenstrom des Kühlfluides wird somit auf vier Teilvolumenströme aufgeteilt, wie in Fig. 1 anhand der gesonderten Strömungspfade 4 zu den Wickelköpfen ersichtlich ist.

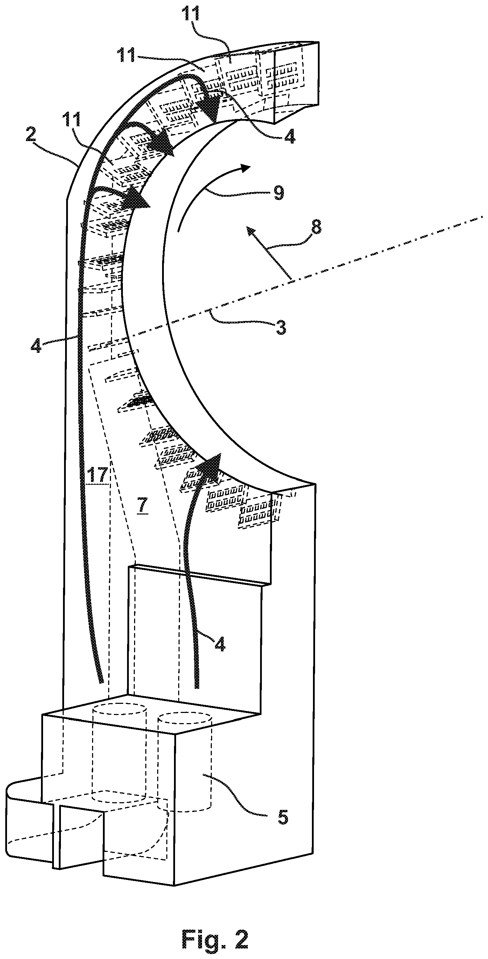

Fig. 2 zeigt einen Teil der Schaltseite der in Fig. 1 dargestellten Maschine. Wie ersichtlich bildet ein Teil eines Gehäuses 2 der Maschine einen Kühlmittelschacht 17, durch welchen das Kühlfluid von dem schematisch in einem unteren Bereich dargestellten Ventilator 5 zum Winkelkopf geführt wird.

Zudem erfolgt in Bezug auf den oberen Bereich des Wickelkopfes 1 eine Aufteilung des Volumenstromes auf einen Teilvolumenstrom für einen rechten Bereich des Wickelkopfes 1 und einen Teilvolumenstrom für einen linken Bereich des Wickelkopfes 1. Fig. 2 zeigt eine Belüftung eines dieser beiden Teile, beispielsweise den linken Teil. Der Bereich der Maschine des zweiten Teiles ist entsprechend symmetrisch zu einer vertikalen Mittelebene zu dem in Fig. 2 dargestellten Teil aufgebaut, sodass eine Strömung im oberen Bereich des Wickelkopfes 1 in diesem Teil entgegengesetzt zum dargestellten Teil verläuft.

Der dargestellte Teil des Gehäuses 2 weist einen etwa rotationssymmetrischen inneren Bereich auf, in welchem der nicht dargestellte Wickelkopf 1 angeordnet ist. Nachdem der Ventilator 5 wie ersichtlich unterhalb des Wickelkopfes 1 positioniert ist, ist ein Strömungspfad 4 vom Ventilator 5 zu einem oberen Bereich des Wickelkopfes 1 länger als ein Strömungspfad 4 zu einem unteren Bereich des Wickelkopfes 1. Um dennoch eine möglichst gleichmäßige Kühlung einzelner Bereiche des Wickelkopfes 1 zu erreichen, sind einerseits gesonderte Strömungspfade 4 vom Ventilator 5 zum unteren Bereich des Wickelkopfes 1 und zum oberen Bereich des Wickelkopfes 1 vorgesehen. Die entsprechende Aufteilung wird hier durch eine Trenneinrichtung 7 erreicht, welche beispielsweise als Blech im Kühlmittelschacht 17 ausgebildet sein kann.

Andererseits sind im Kühlmittelschacht 17 Leitelemente 11 positioniert, welche etwa radial ausgerichtet sind, um eine Strömung im Kühlmittelschacht 17 jeweils zu einem Teil umzulenken, um den Wickelkopf 1 radial mit einer Kühlluft oder einem anderen Fluid zu beaufschlagen. An der dargestellten Schaltseite werden diese Leitelemente 11 durch Schalttürme gebildet, in welchen einzelne Stäbe des Wickelkopfes 1 des Stators an der Schaltseite elektrisch verbunden sind.

An der Nicht-Schaltseite, welche der Schaltseite gegenüberliegt, können die Leitelemente 11 durch im Kühlmittelschacht 17 angeordnete Leitbleche gebildet sein.

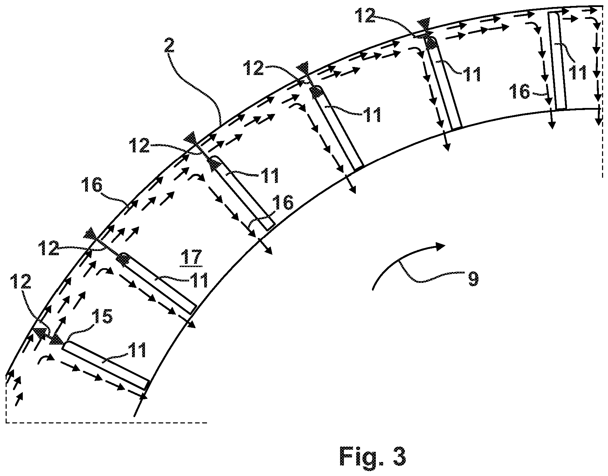

Fig. 3 zeigt im Detail einen oberen Bereich des in Fig. 2 dargestellten Kühlmittelschachtes 17, welcher eine zu einer Rotorachse 3 des Generators etwa rotationssymmetrische Außenfläche aufweist, sodass der Kühlmittelschacht 17 hier etwa kreisringsegmentförmig ausgebildet ist.

Um eine gleichmäßige Kühlung des Wickelkopfes 1 zu erreichen, erstrecken sich die Leitelemente 11 wie dargestellt mit zunehmendem Abstand vom Wärmetauscher 6 in Strömungsrichtung radial weiter nach außen, sodass an jedem Leitelement 11 ein weiterer Bereich einer in Umfangsrichtung 9 verlaufenden Strömung im Kühlmittelschacht 17 abgeschabt bzw. in eine radiale Strömung nach innen umgelenkt wird, mit welcher der jeweilige Bereich des Wickelkopfes 1 beaufschlagt wird, um diesen zu kühlen.

Fig. 3 zeigt wie Fig. 2 nur einen Teil des Kühlmittelschachtes 17 für die Belüftung eines linken Teiles des Wickelkopfes 1, wobei der korrespondierende rechte Teil symmetrisch ausgebildet ist. Entsprechend erstrecken sich die Leitelemente 11 auch im nicht dargestellten rechten Teil mit zunehmendem Abstand vom Wärmetauscher 6 in Strömungsrichtung radial weiter nach außen und verläuft die Strömung in diesem rechten Teil entgegensetzt zur eingezeichneten Strömungsrichtung.

Ein freier Strömungsquerschnitt 12 zwischen den Leitelementen 11 und der Außenfläche nimmt somit von einem Leitelement 11 zum nächsten Leitelement 11 entlang der Strömungsrichtung stetig ab, wobei diese Strömungsrichtung sowohl in Umfangsrichtung 9 als auch entgegen der Umfangsrichtung 9 orientiert sein kann. Dadurch wird auf einfache Weise sichergestellt, dass jedes der Leitelemente 11 einen Teil der Strömung in eine Radialströmung nach innen zum Wickelkopf 1 hin umlenkt und eine Abschattung nachgelagerter Leitelemente 11 kompensiert wird.

Die einzelnen Leitelemente 11 sind somit wie dargestellt jeweils von der Außenfläche beabstandet, wodurch sichergestellt ist, dass nur ein Teil des in Umfangsrichtung 9 strömenden Volumenstromes in Radialrichtung 8 nach innen umgelenkt wird, sodass auch für die in Strömungsrichtung nachgelagerten Teile des Wickelkopfes 1 ein Volumenstrom verbleibt. Um dies zu veranschaulichen, sind Geschwindigkeitsvektoren 16 des Kühlfluides bzw. Kühlmediums im Kühlmittelschacht 17 dargestellt.

Weiter ist ersichtlich, dass die Leitelemente 11 an einem radial außen liegenden Ende verrundet ausgebildet sind, und zwar an einer Abströmseite. Eine Verrundung 15 einer Kante an einer stromabwärts angeordneten Seite des Leitelementes 11 kann dabei beispielsweise einen Radius von 1 mm bis 20 mm aufweisen. Dadurch werden Verwirbelungen in diesem Bereich vermieden, welche negative Auswirkungen auf die Umlenkung hätten.

Eine erfindungsgemäß ausgebildete Maschine weist eine besonders gleichmäßige Kühlung des Wickelkopfbereiches auf, sodass Heißstellen, welche zu Beschädigungen führen könnten, effektiv vermieden werden.

## Patentansprüche

1. Elektrische Maschine, insbesondere Generator, mit einem einen Wickelkopf (1) aufweisenden Stator, einem um eine Rotorachse (3) drehbar im Stator angeordneten Rotor (13) und einem Wärmetauscher (6), wobei der Wärmetauscher (6) fluidisch über einen radial außerhalb des Wickelkopfes (1) angeordneten, zumindest teilweise etwa entlang einer Umfangsrichtung (9) verlaufenden und in einer Radialrichtung (8) durch eine Außenfläche begrenzten Kühlmittelschacht (17) mit dem Wickelkopf (1) verbunden ist, sodass der Wickelkopf (1) mittels einer kontinuierlichen Strömung eines Fluides über den Wärmetauscher (6) und den Wickelkopf (1) kühlbar ist, **dadurch gekennzeichnet, dass** im Kühlmittelschacht (17) mehrere, entlang einer Umfangsrichtung (9) verteilt angeordnete Leitelemente (11) vorgesehen sind, um eine in Umfangsrichtung (9) orientierte Strömung eines Fluides im Kühlmittelschacht (17) zumindest teilweise in eine Radialströmung zum Wickelkopf (1) hin umzulenken und die Strömung auf mehrere Bereiche des Wickelkopfes (1) zu verteilen.

2. Elektrische Maschine nach Anspruch 1, **dadurch gekennzeichnet, dass** die Leitelemente (11) etwa radial ausgerichtet sind.

3. Elektrische Maschine nach Anspruch 1 oder 2, **dadurch gekennzeichnet, dass** die Außenfläche zumindest teilweise etwa als Rotationsfläche zur Rotorachse (3), insbesondere als Zylindermantelfläche oder Kegelmantelfläche, ausgebildet ist.

4. Elektrische Maschine nach einem der Ansprüche 1 bis 3, **dadurch gekennzeichnet, dass** die Leitelemente (11) mit etwa gleichem Abstand zur Rotorachse (3) angeordnet sind.

5. Elektrische Maschine nach einem der Ansprüche 1 bis 4, **dadurch gekennzeichnet, dass** über einen Umfang verteilt 10 bis 100, insbesondere 30 bis 60, Leitelemente (11) angeordnet sind.

6. Elektrische Maschine nach einem der Ansprüche 1 bis 5, **dadurch gekennzeichnet, dass** die Leitelemente (11) mit einem Abstand zur Außenfläche angeordnet sind.

7. Elektrische Maschine nach Anspruch 6, **dadurch gekennzeichnet, dass** die Leitelemente (11) unterschiedliche Abstände zur Außenfläche aufweisen, wobei die Leitelemente (11) mit zunehmender Entfernung vom Wärmetauscher (6) in Strömungsrichtung einen geringeren Abstand von der Außenfläche aufweisen.

8. Elektrische Maschine nach einem der Ansprüche 1 bis 7, **dadurch gekennzeichnet, dass** ein freier Strömungsquerschnitt (12) zwischen der Außenfläche und einem Leitelement (11) zumindest bereichsweise stetig mit zunehmendem Abstand vom Wärmetauscher (6) in Strömungsrichtung von einem Leitelement (11) zum nächsten Leitelement (11) abnimmt.

9. Elektrische Maschine nach einem der Ansprüche 1 bis 8, **dadurch gekennzeichnet, dass** die Leitelemente (11) plattenförmig ausgebildet sind.

10. Elektrische Maschine nach einem der Ansprüche 1 bis 9, **dadurch gekennzeichnet, dass** zumindest einige Leitelemente (11) an einem Ende, welches einen freien Strömungsquerschnitt (12) zwischen der Außenfläche und den Leitelementen (11) begrenzt, eine verrundete Kante aufweisen, vorzugsweise an einer Abströmseite.

11. Elektrische Maschine nach einem der Ansprüche 1 bis 10, **dadurch gekennzeichnet, dass** die Leitelemente (11) durch starr mit dem Wickelkopf (1) verbundene Elemente, insbesondere durch Schalttürme, gebildet sind.

12. Elektrische Maschine nach einem der Ansprüche 1 bis 11, **dadurch gekennzeichnet, dass** ein Ventilator (5), insbesondere ein Axialventilator, vorgesehen ist, mit welchem eine Strömung eines Fluides, insbesondere von Luft, in der Maschine vom Wärmetauscher (6) durch den Kühlmittelschacht (17) zum Wickelkopf (1) und zurück zum Wärmetauscher (6) bewirkt werden kann.

13. Elektrische Maschine nach Anspruch 12, **dadurch gekennzeichnet, dass** der Stator zwei Wickelköpfe aufweist und jeder Wickelkopf (1) über einen gesonderten Strömungspfad (4) mit dem Ventilator (5) und dem Wärmetauscher (6) verbunden ist.

14. Elektrische Maschine nach einem der Ansprüche 1 bis 13, **dadurch gekennzeichnet, dass** gesonderte Strömungspfade (4) für einen oberen Bereich des Wickelkopfes (1) und einen unteren Bereich des Wickelkopfes (1) vorgesehen sind.

## Claims

1. Electrical machine, in particular a generator, with a stator having a winding overhang (1), a rotor (13) arranged in the stator such that it can rotate about a rotor axis (3), and a heat exchanger (6), wherein the heat exchanger (6) is fluidically connected to the winding overhang (1) via a coolant shaft (17), which is arranged radially outside the winding overhang (1), extending at least partially approximately along a circumferential direction (9), and bounded by an outer surface in a radial direction (8), such that the winding overhang (1) can be cooled by means of a continuous flow of a fluid via the heat exchanger (6) and the winding overhang (1), **characterised in that** a plurality of guide elements (11), arranged in a distributed manner along a circumferential direction (9), are provided in the coolant shaft (17), so as to deflect, at least partially, a flow of a fluid orientated in the circumferential direction (9) in the coolant shaft (17) into a radial flow towards the winding overhang (1), and to distribute the flow to a plurality of regions of the winding overhang (1).

2. Electrical machine in accordance with Claim 1, **characterised in that** the guide elements (11) are oriented approximately radially.

3. Electrical machine in accordance with Claims 1 or 2, **characterised in that** the outer surface is formed approximately, at least partially, as a surface of rotation with respect to the rotor axis (3), in particular as a cylindrical shell surface, or a conical shell surface.

4. Electrical machine in accordance with one of the Claims 1 to 3, **characterised in that** the guide elements (11) are arranged at approximately the same distance from the rotor axis (3).

5. Electrical machine in accordance with one of the Claims 1 to 4, **characterised in that** between 10 and 100, in particular between 30 and 60, guide elements (11) are arranged in a distributed manner over a circumference.

6. Electrical machine in accordance with one of the Claims 1 to 5, **characterised in that** the guide elements (11) are arranged at a distance from the outer surface.

7. Electrical machine in accordance with Claim 6, **characterised in that** the guide elements (11) have varying distances from the outer surface, wherein the guide elements (11) have a smaller distance from the outer surface, with increasing distance from the heat exchanger (6) in the direction of flow.

8. Electrical machine in accordance with one of the Claims 1 to 7, **characterised in that** a free flow cross section (12) between the outer surface and a guide element (11) decreases steadily from one guide element (11) to the next guide element (11), at least in some regions, with increasing distance from the heat exchanger (6) in the direction of flow.

9. Electrical machine in accordance with one of the Claims 1 to 8, **characterised in that** the guide elements (11) are designed in the shape of a plate.

10. Electrical machine in accordance with one of the Claims 1 to 9, **characterised in that** at one end at least some guide elements (11), preferably on a downstream side, have a rounded edge, which defines a free flow cross section (12) between the outer surface and the guide elements (11).

11. Electrical machine in accordance with one of the Claims 1 to 10, **characterised in that** the guide elements (11) are formed by means of elements that are rigidly connected to the winding overhang (1), in particular by means of switching towers.

12. Electrical machine in accordance with one of the Claims 1 to 11, **characterised in that** a fan (5) is provided, in particular an axial fan, with which a flow of a fluid, in particular a flow of air, can be produced in the machine from the heat exchanger (6), through the coolant shaft (17), to the winding overhang (1), and back to the heat exchanger (6).

13. Electrical machine in accordance with Claim 12, **characterised in that** the stator has two winding heads, and each winding overhang (1) is connected to the fan (5) and the heat exchanger (6) via a separate flow path (4) .

14. Electrical machine in accordance with one of the Claims 1 to 13, **characterised in that** separate flow paths (4) are provided for an upper region of the winding overhang (1) and a lower region of the winding overhang (1).

## Revendications

1. Machine électrique, en particulier générateur, avec un stator comportant une tête d'enroulement (1), un rotor (13) disposé pouvant tourner dans le stator autour d'un axe de rotor (3) et un échangeur de chaleur (6), sachant que l'échangeur de chaleur (6) est relié de façon fluidique à la tête d'enroulement (1) par un puits de réfrigérant (17) disposé radialement en dehors de la tête d'enroulement (1) passant au moins en partie à peu près le long d'une direction périphérique (9) et délimité dans une direction radiale (8) par une surface extérieure de sorte que la tête d'enroulement (1) peut être refroidie au moyen d'un flux continu d'un fluide sur l'échangeur de chaleur (6) et la tête d'enroulement (1), **caractérisée en ce que** plusieurs éléments conducteurs (11) disposés répartis le long d'une direction périphérique (9) dans le puits de réfrigérant (17) sont prévus pour dévier un flux d'un fluide orienté dans la direction périphérique (9) au moins en partie dans un écoulement radial vers la tête d'enroulement (1) et répartir le flux sur plusieurs zones de la tête d'enroulement (1).

2. Machine électrique selon la revendication 1, ***caractérisée en ce que*** les éléments conducteurs (11) sont orientés à peu près radialement.

3. Machine électrique selon la revendication 1 ou 2, ***caractérisée en ce que*** la surface extérieure est constituée au moins en partie à peu près sous la forme d'une surface de rotation par rapport à l'axe de rotor (3), en particulier sous la forme d'une surface d'enveloppe cylindrique ou d'une surface d'enveloppe conique.

4. Machine électrique selon l'une quelconque des revendications 1 à 3, ***caractérisée en ce que*** les éléments conducteurs (11) sont disposés à peu près à la même distance de l'axe de rotor (3).

5. Machine électrique selon l'une quelconque des revendications 1 à 4, ***caractérisée en ce que*** les éléments conducteurs (11) sont disposés répartis par 10 à 100, en particulier par 30 à 60, sur une périphérie.

6. Machine électrique selon l'une quelconque des revendications 1 à 5, ***caractérisée en ce que*** les éléments conducteurs (11) sont disposés à une distance de la surface extérieure.

7. Machine électrique selon la revendication 6, ***caractérisée en ce que*** les éléments conducteurs (11) comportent des distances différentes de la surface extérieure, sachant que les éléments conducteurs (11) comportent une distance plus faible par rapport à la surface extérieure avec un éloignement croissant de l'échangeur de chaleur (6) dans la direction d'écoulement.

8. Machine électrique selon l'une quelconque des revendications 1 à 7, ***caractérisée en ce qu'***une section d'écoulement libre (12) entre la surface extérieure et un élément conducteur (11) diminue d'un élément conducteur (11) à l'élément conducteur suivant (11) dans la direction d'écoulement au moins par endroits de façon permanente avec une distance croissante de l'échangeur de chaleur (6).

9. Machine électrique selon l'une quelconque des revendications 1 à 8, ***caractérisée en ce que*** les éléments conducteurs (11) sont constitués en forme de plaques.

10. Machine électrique selon l'une quelconque des revendications 1 à 9, ***caractérisée en ce qu'***au moins plusieurs éléments conducteurs (11) comportent un bord arrondi à une extrémité, de préférence sur un côté de fuite, lequel délimite une section d'écoulement libre (12) entre la surface extérieure et les éléments conducteurs (11).

11. Machine électrique selon l'une quelconque des revendications 1 à 11, ***caractérisée en ce que*** les éléments conducteurs (11) sont formés par des éléments reliés de façon rigide à la tête d'enroulement (1), en particulier par des tours de commutation.

12. Machine électrique selon l'une quelconque des revendications 1 à 11, ***caractérisée en ce qu**'*un ventilateur (5), en particulier un ventilateur axial, est prévu, avec lequel un flux d'un fluide, en particulier d'air, peut être créé dans la machine de l'échangeur de chaleur (6) à travers le puits de réfrigérant (17) vers la tête d'enroulement (1) et retour à l'échangeur de chaleur (6).

13. Machine électrique selon la revendication 12, ***caractérisée en ce que*** le stator comporte deux têtes d'enroulement et chaque tête d'enroulement (1) est reliée par une voie d'écoulement (4) spéciale au ventilateur (5) et à l'échangeur de chaleur (6).

14. Machine électrique selon l'une quelconque des revendications 1 à 13, ***caractérisée en ce que*** des voies d'écoulement (4) spéciales sont prévues pour une zone supérieure de la tête d'enroulement (1) et une zone inférieure de la tête d'enroulement (1).
